# EUROPEAN PATENT SPECIFICATION

(11) **EP 2 812 941 B1**
(45) Date of publication and mention of the grant of the patent: **04.11.2015**
(21) Application number: 13705202.3
(22) Date of filing: 05.02.2013
(51) Int. Cl.: H01M 8/06, H01M 8/04

(54) **METHOD AND ARRANGEMENT FOR UTILIZING RECIRCULATION FOR HIGH TEMPERATURE FUEL CELL SYSTEM**
VERFAHREN UND VORRICHTUNG ZUR VERWENDUNG VON REZIRKULATION FÜR EIN HOCHTEMPERATUR-BRENNSTOFFZELLENSYSTEM
PROCÉDÉ ET AGENCEMENT POUR L'UTILISATION DE LA RECIRCULATION DANS UN SYSTÈME DE PILE À COMBUSTIBLE À HAUTE TEMPÉRATURE

(30) Priority: 10.02.2012 FI 20125147
(43) Date of publication of application: 17.12.2014
(73) Proprietor: Convion Oy, 02150 Espoo (FI)
(72) Inventor: RUOKOMÄKI, Jaakko, FI-02280 Espoo (FI)
(74) Representative: LEITZINGER OY
(86) International application number: PCT/FI2013/050118
(87) International publication number: WO 2013/117810

(56) References cited:
- EP-A1- 1 571 726
- EP-A1- 1 770 812
- EP-A2- 1 998 398
- WO-A1-03/098728

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed. Fuel cell's, by means of which energy of fuel, for example biogas, is directly converted to electricity via a chemical reaction in an environmentally friendly process, are promising future energy conversion devices.

### The state of the art

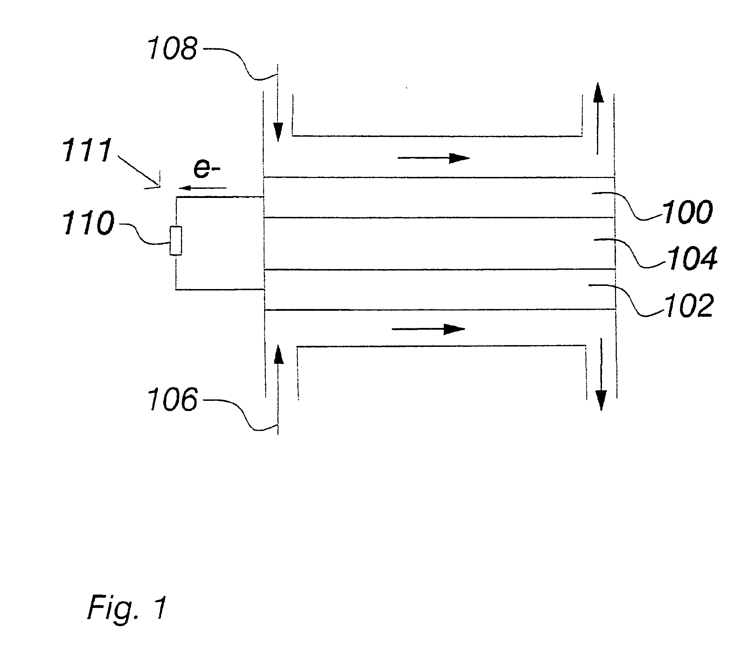

Fuel cell, as presented in fig 1, comprises an anode side 100 and a cathode side 102 and an electrolyte material 104 between them. In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with fuel 108 producing water and also typically carbon dioxide (CO2). Between anode 100 and cathode 102 is an external electric circuit 111 comprising a load 110 for the fuel cell.

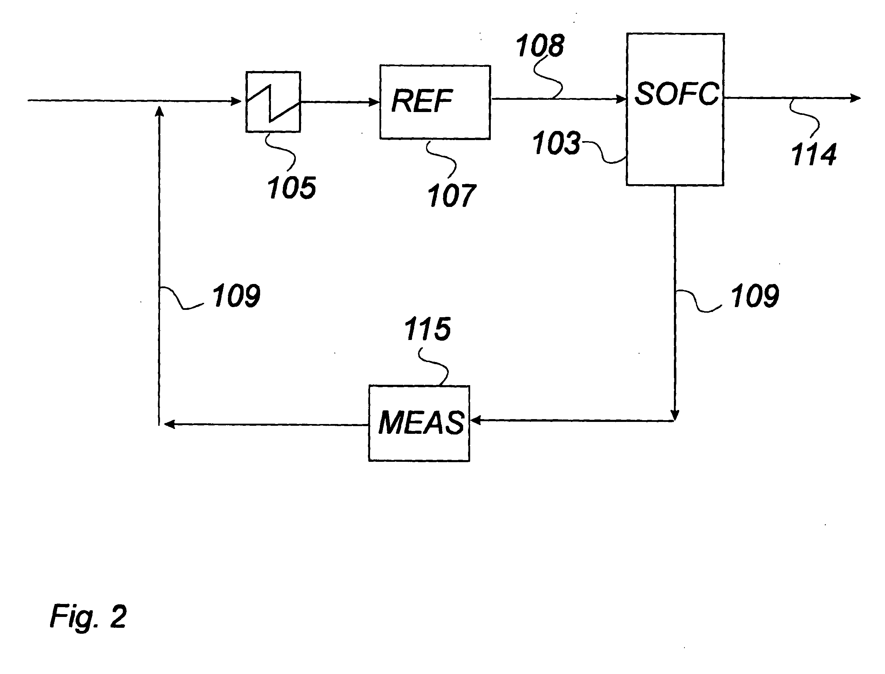

In figure 2 is presented a SOFC device as an example of a high temperature fuel cell device. SOFC device can utilize as fuel for example natural gas, bio gas, methanol or other compounds containing hydrocarbons. SOFC device in figure 2 comprises more than one, typically plural of fuel cells in stack formation 103 (SOFC stack). Each fuel cell comprises anode 100 and cathode 102 structure as presented in figure 1. Part of the used fuel can be recirculated in feedback arrangement 109 through each anode. SOFC device in fig 2 also comprises fuel heat exchanger 105 and reformer 107. Typically several heat exchangers are used for controlling thermal conditions at different locations in a fuel cell process. Reformer 107 is a device that converts the fuel such as for example natural gas to a composition suitable for fuel cells, for example to a composition containing hydrogen and methane, carbon dioxide, carbon monoxide and inert gases. Anyway in each SOFC device it is though not necessary to have a reformer.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device is an electrochemical conversion device that produces electricity directly from oxidizing fuel. Advantages of SOFC device include high efficiencies, long term stability, low emissions, and cost. The main disadvantage is the high operating temperature which results in long start up and shutdown times and in both mechanical and chemical compatibility issues.

Natural gases such as methane and gases containing higher carbon compounds are typically used as fuels in SOFCs, which gases, however, have to be preprocessed before feeding to the fuel cells to prevent coking, i.e. formation of harmful carbon compounds such as for example coke, fly dust, tar, carbonate and carbide compounds. These different forms of carbon can be in this context called as general term being harmful carbon compounds. Hydrocarbons go through a thermal or catalytic decomposition in the formation of harmful carbon compounds. The produced compound can adhere to the surfaces of the fuel cell device and adsorbs on catalysts, such as nickel particles. The harmful carbon compound produced in the coking coats some of the active surface of the fuel cell device, thus significantly deteriorating the reactivity of the fuel cell process. The harmful carbon compounds may even completely block the fuel passage.

Preventing formation of harmful carbon compounds is, therefore, important for ensuring a long service life for the fuel cells. The prevention of formation of harmful carbon compounds also saves catalysts that are the substances (nickel, platinum, etc) used in fuel cells for accelerating chemical reactions. Gas pre-processing requires water, which is supplied to the fuel cell device. The water produced in combining the oxygen ion and the fuel, i.e. the gas on the anode 100 side, can also be used in the pre-processing of the gas.

The anode electrode of solid oxide fuel cell (SOFC) typically contains significant amounts of nickel that is vulnerable to form nickel oxide if the atmosphere is not reducing. If nickel oxide formation is severe, the morphology of electrode is changed irreversibly causing significant loss of electrochemical activity or even break down of cells. Hence, SOFC systems require purge gas, i.e. safety gas, containing reductive agents (such as hydrogen diluted with inert such as nitrogen) during the start-up and shutdown in order to prevent the fuel cell's anode electrodes from oxidation. In practical systems the amount of purge gas has to be minimized because an extensive amount of, e.g. pressurized gas containing hydrogen, is expensive and problematic as space-requiring components. Purge gases are not necessarily elemental and they can be also compound gases.

Processing of CPOx (Catalytic Partial Oxidation) in fuel cell systems traditionally produces carbonmono-oxide CO and hydrogen H2. Requirements for fuel cell system start-up or shutdown operation includes sufficient steam and hydrogen production, where CO production in larger amount is harmful. Using higher air, i.e. oxygen amounts for more complete oxidation produces too much heat making temperature raise excessive in the start-up situation or cooling process too slow in the shutdown situation.

CPOx (Catalytic Partial Oxidation) traditionally produces carbon monoxide CO and hydrogen H₂. This gas mixture is used for various chemical industry purposes, and the operating temperature of CPOx is above 700°C. The traditional product gas is unsuitable for fuel cell due to coke formation in the system heating/operating temperatures. Requirements for start-up or shutdown gas include sufficient steam and hydrogen production, whereas CO production in larger amount is harmful. Using higher air, i.e. oxygen amounts for more complete oxidation, produces too much heat making the temperature raise excessive in regards to normal SOFC operating conditions, thermal management, thermal stresses and material selection.

Next is shortly discussed some prior art documents relating to this technical field. In patent application document US2011159386 A1 is presented a process for starting up a fuel cell system, which has a fuel cell with a cathode side and an anode side, a reformer and an auxiliary burner. Fuel cell air is preheated with the auxiliary burner and fed to the cathode side of the fuel cell. Residual gas is circulated from the anode side of the fuel cell to the reformer and from the reformer to the anode side. Anyway feeding in air to the anode side is stopped in order to remove oxygen from the anode side recirculation.

In patent application document US2006093879 A1 is presented a procedure for starting up a fuel cell system having an anode exhaust recycle loop. The fuel cell system is disconnected from its primary load and has air in both its cathode side and anode side. Major part of gas from recirculation of the anode side flow is exhausted and only a small limited flow of fuel is provided into the anode side recirculation. Hydrogen and oxygen in the fuel and air mixture are catalytically reacted as they recirculate in the anode side until substantially no oxygen remains in the recycle loop; and then the fuel flow rate into the anode side flow is increased to normal operating levels and thereafter connecting the primary load across the cell. So embodiments presented in US2006093879 A1 are for reforming stage of the fuel cell system, and the main point also in this document is to remove oxygen from the anode side. Hydrogen and water steam have to be fed to the anode side instead of production of them.

In patent application US2002102443 A1 is presented a procedure for shutting down a fuel cell system having an anode exhaust recycle loop. A portion of the anode side flow exhaust is recirculated through the anode side in a recycle loop during operation. The fuel cell system is shut down by disconnecting the primary load from the external circuit and thereafter stopping the flow of fresh hydrogen containing fuel into the anode side flow and catalytically reacting hydrogen in the anode side recirculation by recirculating such gases within the anode recycle loop into contact with a catalyst until substantially all the hydrogen is removed. Thus the document US2002102443 A1 presents a similar but reversed method to that presented in the document US2006093879 A1.

Further the publication EP1571726 A1 as well as the publication EP1998398 A2 represent the prior art of the invention.

### Short description of the invention

The object of the invention is to accomplish a fuel cell system, where need to use purge gas and external water connections is minimized or even completely neglected in start-up and shutdown situations of a fuel cell system. This is achieved by an arrangement utilizing recirculation for high temperature fuel cell system, each fuel cell in the fuel cell system comprising an anode side, a cathode side, and an electrolyte between the anode side and the cathode side, and the fuel cell system comprises means for performing anode side recirculation flow of reactants. The arrangement comprises means for accomplishing recycle ratio 70 % or more for the recirculation flow, means for feeding to the recirculation a feed-in flow, which comprises substantially high oxygen content, the feed-in flow being 30 % or less of entire flow, means for performing heat exchanging to provide substantially low temperature conditions in the recirculation flow, means for performing catalytic partial oxidation in the recirculation flow to produce a substantially high amount of hydrogen for the recirculation flow in fuel cell system start-up or shutdown situations, and means for exhausting 30 % or less of the entire flow from the anode side recirculation the means for performing heat exchanging and accomplishing recycle ratio being arranged to provide inlet temperature of 350 °C - 500 °C to the means for performing catalytic partial oxidation while outlet temperature of said means not exceeding 800 °C.

The focus of the invention is also a method utilizing recirculation for high temperature fuel cell system, in which method is performed anode side recirculation flow of reactants. In the method is accomplished recycle ratio 70 % or more for the recirculation flow, is fed to the recirculation a feed-in flow, which comprises substantially high oxygen content, and the feed-in flow being 30 % or less of entire flow, is performed heat exchanging to provide substantially low temperature conditions in the recirculation flow, is performed catalytic partial oxidation in the recirculation flow to produce a substantially high amount of hydrogen for the recirculation flow in fuel cell system start-up or shutdown situations, and 30 % or less of the entire flow is exhausted from the anode side recirculation, the heat exchanging providing the inlet temperature of 350 °C - 500 °C to the catalytic partial oxidation while the outlet temperature is not exceeding 800 °C.

The invention is based on accomplishing a substantially high recycle ratio for the recirculation flow, which has sufficient oxygen or air content for required oxidation level, and on performing heat exchanging to provide substantially low temperature conditions in the recirculation flow. Catalytic partial oxidation is performed to produce a substantially high amount of at least one of hydrogen and steam for the recirculation flow and to control at least one of steam to carbon (S/C) and oxygen to carbon (O/C) relationship conditions in fuel cell system start-up or shutdown situations.

The benefit of the invention is that start-ups and shutdowns of the fuel cell system can be performed even without any external purge gases required, which brings significant cost and space savings and installation benefits.

### Short description of figures

- Figure 1: presents a single fuel cell structure.
- Figure 2: presents an example of a SOFC device.
- Figure 3: presents temperature values at CPOx outlet and inlet and outlet S/C (steam to carbon -ratio) values with different recycling ratios.
- Figure 4: presents a preferred embodiment according to the present invention.

### Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched in between the electrodes, anode 100 and cathode 102. SOFCs can also be made in tubular geometries where for example either air or fuel is passed through the inside of the tube and the other gas is passed along the outside of the tube. This can be also arranged so that the gas used as fuel is passed through the inside of the tube and air is passed along the outside of the tube. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated at temperatures ranging from 600 to 1,000 °C. Reduction of oxygen 106 (Fig. 1) into oxygen ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane), different biogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation, i.e. coking caused by higher hydrocarbons. This water can be provided internally by circulating the anode gas exhaust flow, because water is produced in excess amounts in fuel cell reactions, and/or said water can be provided with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water. Because anode electrode of a solid oxide fuel cell typically consists of a porous, nickel matrix ceramic-metallic structure which morphology is critical for cell performance, oxidation of nickel may change the fuel cells performance irreversibly. This is why SOFC systems require purge gas, i.e. safety gas containing reductive agents, such as hydrogen diluted with inert such as nitrogen, in order to prevent anode electrodes of the fuel cell system from oxidation. In practical fuel cell systems it is uneconomical to maintain an excessive purge gas storage, i.e. the amount of purge gas should be minimized. Also a pressurization arrangement, which is needed for the use of purge gas, has a significant effect on the physical size of the fuel cell system.

In a method according to the present invention is utilized catalytic partial oxidation (CPOx) in a novel manner to provide a high recycle ratio (RR), for example 90%, in a fuel cell system by using for example an anode recycle blower. This enables a gas compound which will contain the heat from said catalytic partial oxidation. Thus fuel feed inlet composition with high oxygen content, i.e. high lambda are feasible (lambda 0.6-0.75, where lambda 1 is complete stoichiometric combustion), which would in a prior art embodiment mean CPOx outlet temperatures above 1600-1800 °C. But in the method according to the invention, the high RR with high lambda are utilized to provide sufficient quality gas for all start-up requirements, while not exceeding 800 °C outlet temperature. In the catalytic partial oxidation (CPOx) according to the invention, the released heat will be handled with high anode recycling ratio (RR), which is the recirculated part of entire flow (volumetric). For example when RR=90%, then 90% of the gas will be cooled in the anode side recirculation and recycled back to the CPOx inlet. This will also ensure steam presence in the heated components upstream of CPOx, which inhibits carbon formation in e.g. heat exchangers. CPOx inlet temperature is for example around 450 °C. CPOx is performed in a catalyst or in a reformer.

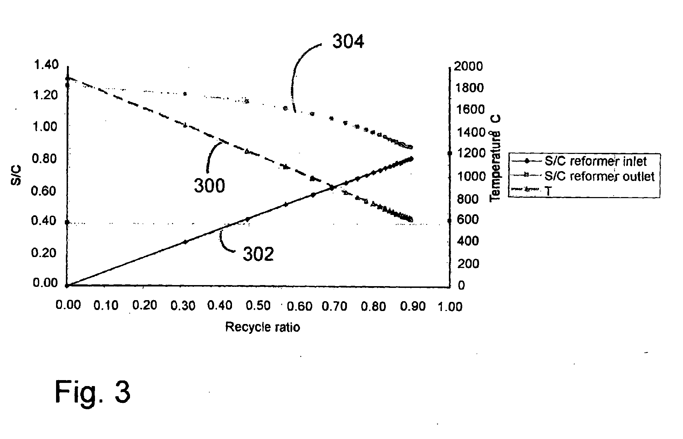

In figure 3 is presented temperature values 301 at CPOx outlet and inlet 302 and outlet 304 S/C (steam to carbon -ratio) values with different recycle ratios. It can be seen that with a required inlet gas mix without anode side recirculation, the outlet temperature would arise approximately at 1900 °C. But in one embodiment according to the invention, the target temperature value at CPOx outlet is less than 700 °C due to material selections in the anode side recirculation.

Next will be discussed the hydrogen consumption on the stacks versus the hydrogen produced at CPOx. If the stacks consume hydrogen, this can be handled with reducing the lambda of the feed-in gas: i.e. less oxygen will be fed to the CPOx, and more hydrogen will be formed. In other words, depending on the hydrogen consumption on the stacks, the air feed, i.e. oxygen feed can be adjusted to prevent the hydrogen deficiency in the stacks. Although this also means that less steam will be formed, this is balanced with hydrogen oxidation at the stacks in a case that hydrogen amount will be consumed in reactions with oxygen producing steam, and this will show as more steam from the anode side recirculation. Thus the hydrogen consumption on stacks is an adjustable parameter. Control should take into account the steam to carbon requirement: i.e. the CPOx should not reduce the inlet oxygen feed more than necessary to offset the consumption, because reducing the air feed too much would start reducing S/C of the fuel cell system, which would provoke coking.

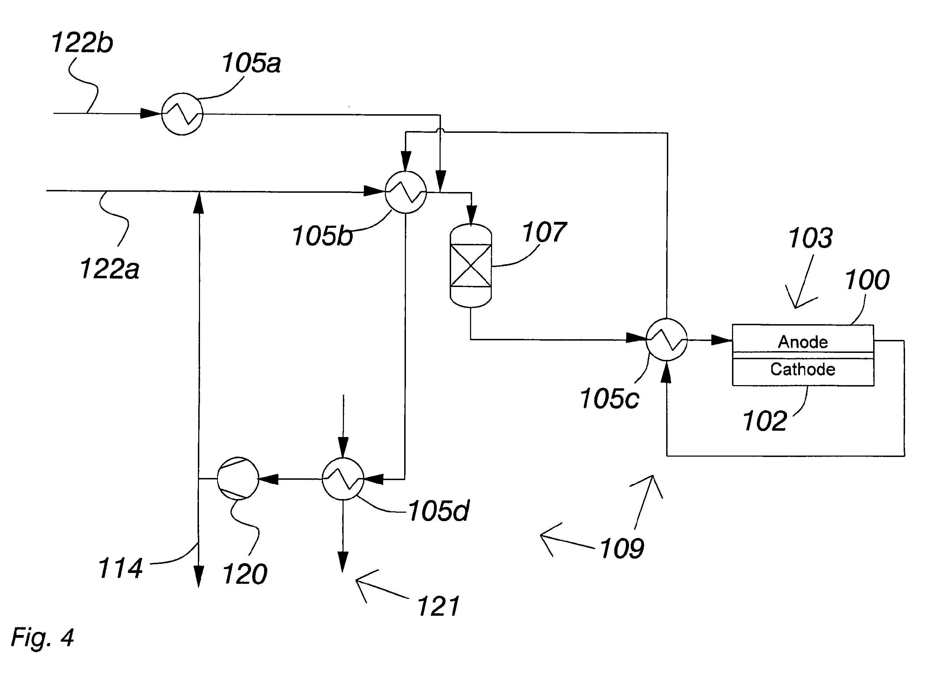

In figure 4 is presented a preferred arrangement according to the present invention, where the fuel cell system comprises means 109 for performing anode 100 side recirculation flow of reactants. The means 109 comprises pipes and other system parts which are needed to arrange the recirculation. The other system parts 109 may be for example connectors and valves. The arrangement comprises means 122 (a,b) for feeding to the recirculation a feed-in gas flow, which comprises substantially high oxygen content, the feed-in flow being 30 % or less of volume of entire flow. Preferably the feed-in flow is about 10 % of the recirculation flow, which thus represents the 90% part of the entire flow. In this preferred arrangement the means 122 comprises of means 122a and 122b, which are arranged by pipes and other system parts needed for the feed-in operations of air and fuel. The other system parts 122 (a,b) may be for example connectors, valves and/or controllable valves to perform controlled feed-in operations. The means 122a feeds in gas used as fuel, and the means 122b feeds in air, which is mixed to the fuel flow and to the recirculating gas by a mixer (not shown) by connecting pipes of fuel and recirculating gas and air to the mixer or without by connecting the pipes of fuel and recirculating gas and air. The connected feed-in flows of air and fuel forms said feed-in gas flow to the recirculation. The described feed-in arrangement is an exemplary one, and also other feed-in arrangements can be utilized in embodiments according to the invention to form said feed-in gas flow, which comprises substantially high oxygen content, and the feed-in flow being 30 % or less of volume of entire flow. Accordingly the preferred arrangement comprises means 114 for exhausting 30 % or less of the entire flow from the anode side recirculation. Said means 114 are arranged by a pipe 114 and/or other system parts, such as for example connectors and/or valves.

The means 122 (a,b) for feeding are arranged to feed to the recirculation a feed-in flow, which comprises lambda-value from range 0.55 - 0.90 indicating said substantially high oxygen content of the feed-in flow. When needed, the lambda value is measured by using a lambda sensor or other sensor, which indicates the oxygen content. The arrangement comprises means 120 for accomplishing recycle ratio 70 % or more for the recirculation flow. The means 120 preferably comprise an anode recycle blower 120 for accomplishing recycle ratio RR of 80% - 94%, for example RR=90%, for the recirculation flow to enable a gas compound which contains heat from the oxidation performed by means 107 for performing catalytic partial oxidation. In the preferred embodiment of figure 4 means 107 are presented as a catalyst 107, but as preferably than the catalyst, the means 107 can also realized as a reformer 107. The catalytic partial oxidation is performed in the recirculation flow to produce a substantially high amount of hydrogen and steam for the recirculation flow in fuel cell system start-up or shutdown situations. Preferably the means 107 are arranged to produce content percent of 3,5 % - 15 % of hydrogen for the recirculation flow as said substantially high amount of hydrogen. The means 107 for performing catalytic partial oxidation can also be arranged to perform catalytic partial oxidation with mixed feed-in flow and recirculation flow, so that gases in the anode side of the fuel cell system are thermodynamically outside of coking regions in normal temperature range of fuel cell system heating, cooling or operation.

The preferred arrangement of figure 4 comprises means 105(a,b,c,d) for performing heat exchanging to provide substantially low temperature conditions in the recirculation flow to prevent auto-ignition before the catalyst. The means 105 for performing heat exchanging are preferably arranged to provide inlet temperature of 350 °C - 500 °C, for example 450 °C, to the means 107 for performing catalytic partial oxidation in the recirculation flow. In this described preferred arrangement the means 105 comprises of four heat exchangers 105a, 105b, 105c, 105d. The heat exchanger 105a heats feed-in air by using electrical heating for example to 450 °C for example before mixing to the fuel feed-in gas flow. The heat exchanger 105b heats fuel feed-in gas flow and recirculating gas flow for example to 450 °C before mixing to the feed-in air flow, and then the mixed gas flow of air and fuel flows to the means 107 for performing catalytic partial oxidation. The heat exchanger 105c cools to some extent gas, which is flowing to the anode sides 100 of the stack(s) 103. In the start-up situation, i.e. in the heating phase of the fuel cell system the stacks 103 cool the recirculating gas. Also air, which is fed to the cathode sides 102 of the stacks, cools the recirculating gas at least when the stack module comprises a radiator to enhance the heat exchanging from the recirculating gas to the air. The heat exchanger 105d performs cooling 121, for example air cooling, of the recirculating gas, i.e. in this process phase heat can be transferred out from the fuel cell system or heat is utilized in heat integration inside the fuel cell system. The described heat exchanging arrangement is an exemplary one and other variations can be utilized in embodiments according to the invention.

Embodiments according to the invention can be utilized in different kind of start-up or shutdown situations of the fuel cell system, for example in short time shutdowns and start-ups for service needs, etc. The invention can also be utilized for example after a short time period ESD (Emergency ShutDown) situation, after which the fuel cell system is immediately started up back to the electricity production state, or it can be used in hot idle to keep the temperatures high with no load.

Although the invention has been presented in reference to the attached figures and specification, the invention is by no means limited to those as the invention is subject to variations within the scope allowed for by the claims.

## Claims

1. An arrangement utilizing recirculation for high temperature fuel cell system, each fuel cell in the fuel cell system comprising an anode side (100), a cathode side (102), and an electrolyte (104) between the anode side and the cathode side, and the fuel cell system comprises means (109) for performing anode (100) side recirculation flow of reactants, **characterized by**, that the arrangement comprises means (120) for accomplishing recycle ratio 70 % or more for the recirculation flow volume, means (122) for feeding to the recirculation a feed-in flow, which comprises substantially high oxygen content, the feed-in flow being 30 % or less of entire flow volume, means (105) for performing heat exchanging to provide substantially low temperature conditions in the recirculation flow, means (107) for performing catalytic partial oxidation in the recirculation flow to produce a substantially high amount of hydrogen for the recirculation flow in fuel cell system start-up or shutdown situations, and means (114) for exhausting 30 % or less of the entire flow volume from the anode side recirculation the means (105) and (120) being arranged to provide inlet temperature of 350 °C - 500 °C to the means (107) while outlet temperature of said means (107) not exceeding 800 °C.

2. An arrangement utilizing recirculation in accordance with claim 1, **characterized by**, that the arrangement comprises an anode recycle blower (120) as the means (120) for accomplishing recycle ratio of 80% - 94% for the recirculation flow volume to enable a gas compound which contains heat from the oxidation performed by the means (107).

3. An arrangement utilizing recirculation in accordance with claim 1, **characterized by**, that the means (122) for feeding are arranged to feed to the recirculation a feed-in flow, which comprises lambda-value from range 0.55 - 0.90 indicating said substantially high oxygen content of the feed-in flow.

4. An arrangement utilizing recirculation in accordance with claim 1, **characterized by**, that the means (107) for performing catalytic partial oxidation in the recirculation flow are arranged to produce content percent of 3,5 % - 15 % of hydrogen for the recirculation flow volume as said substantially high amount of hydrogen.

5. An arrangement utilizing recirculation in accordance with claim 1, **characterized by**, that means (107) for performing catalytic partial oxidation in the recirculation flow are arranged to perform catalytic partial oxidation with mixed feed-in flow and recirculation flow, so that gases in the anode side of the fuel cell system are thermodynamically outside of coking regions in normal temperature range of fuel cell system heating, cooling or operation.

6. A method utilizing recirculation for high temperature fuel cell system, in which method is performed anode (100) side recirculation flow of reactants, **characterized by**, that in the method is accomplished recycle ratio 70 % or more for the recirculation flow volume, is fed to the recirculation a feed-in flow, which comprises substantially high oxygen content, and the feed-in flow being 30 % or less of entire flow volume, is performed heat exchanging to provide substantially low temperature conditions in the recirculation flow, is performed catalytic partial oxidation in the recirculation flow to produce a substantially high amount of hydrogen for the recirculation flow in fuel cell system start-up or shutdown situations, and 30 % or less of the entire flow volume is exhausted from the anode side recirculation, the heat exchanging providing the inlet temperature of 350 °C - 500 °C to the catalytic partial oxidation while the outlet temperature is not exceeding 800 °C.

7. A method in accordance with claim 6, **characterized by**, that in the method is accomplished by anode (100) recycle blowing recycle ratio of 80% - 94% for the recirculation flow volume to enable a gas compound which contains heat from the catalytic partial oxidation.

8. A method in accordance with claim 6, **characterized by**, that in the method is fed to the recirculation a feed-in flow, which comprises lambda-value from range 0.55 - 0.90 indicating said substantially high oxygen content of the feed-in flow.

9. A method in accordance with claim 6, **characterized by**, that in the method is performed catalytic partial oxidation in the recirculation flow to produce content percent of 3,5 % - 15 % of hydrogen for the recirculation flow volume as said substantially high amount of hydrogen.

10. A method in accordance with claim 6, **characterized by**, that in the method is performed catalytic partial oxidation with mixed feed-in flow and recirculation flow, so that gases in the anode side of the fuel cell system are thermodynamically outside of coking regions in normal temperature range of fuel cell system heating, cooling or operation.

## Patentansprüche

1. Anordnung, die eine Rückführung für ein Hochtemperatur-Brennstoffzellensystem nutzt, wobei jede Brennstoffzelle im Brennstoffzellensystem eine Anodenseite (100), eine Kathodenseite (102) und einen Elektrolyten (104) zwischen der Anodenseite und der Kathodenseite umfasst, und wobei das Brennstoffzellensystem Mittel (109) zum Ausführen eines anodenseitigen (100) Rückführungsstroms von Reaktanten umfasst, **dadurch gekennzeichnet, dass** die Anordnung Mittel (120) zum Erreichen eines Rückführungsverhältnisses von 70 % oder mehr für das Rückführungsstromvolumen umfasst, sowie Mittel (122) zum Einspeisen eines Einleitungsstroms in die Rückführung, der einen im Wesentlichen hohen Sauerstoffgehalt umfasst, wobei der Einleitungsstrom 30 % oder weniger des gesamten Stromvolumens ausmacht, Mittel (105) zum Ausführen des Wärmeaustauschs, um für im Wesentlichen niedrige Temperaturbedingungen im Rückführungsstrom zu sorgen, Mittel (107) zum Ausführen einer katalytischen Teiloxidation im Rückführungsstrom, um eine im Wesentlichen große Menge von Wasserstoff in Start- und Abschaltsituationen des Brennstoffzellensystems zu erzeugen, und Mittel (114) zum Ausschöpfen von 30 % oder weniger des gesamten Stromvolumens von der anodenseitigen Rückführung, wobei die Mittel (105) und (120) so ausgelegt sind, dass sie für eine Einlasstemperatur von 350 °C - 500 °C für das Mittel (107) sorgen, während die Auslasstemperatur des Mittels (107) 800 °C nicht übersteigt.

2. Anordnung, die die Rückführung nach Anspruch 1 nutzt, **dadurch gekennzeichnet, dass** die Anordnung ein Anodenrecyclinggebläse (120) als Mittel (120) zum Erreichen eines Recyclingverhältnisses von 80 % - 94 % für das Rückführungsstromvolumen umfasst, um eine Gasverbindung zu ermöglichen, die Wärme aus der Oxidation enthält, welche vom Mittel (107) ausgeführt wurde.

3. Anordnung, die die Rückführung nach Anspruch 1 nutzt, **dadurch gekennzeichnet, dass** das Mittel (122) zum Einspeisen so ausgelegt ist, dass es einen Einleitungsstrom, der einen Lambda-Wert im Bereich von 0,55 - 0,90 umfasst, was den im Wesentlichen hohen Sauerstoffgehalt des Einleitungsstroms anzeigt, in die Rückführung einspeist.

4. Anordnung, die die Rückführung nach Anspruch 1 nutzt, **dadurch gekennzeichnet, dass** das Mittel (107) zum Ausführen einer katalytischen Teiloxidation im Rückführungsstrom so ausgelegt ist, dass es einen prozentualen Gehalt von 3,5 % - 15 % Wasserstoff für das Rückführungsstromvolumen als die im Wesentlichen große Menge Wasserstoff erzeugt.

5. Anordnung, die die Rückführung nach Anspruch 1 nutzt, **dadurch gekennzeichnet, dass** das Mittel (107) zum Ausführen der katalytischen Teiloxidation im Rückführungsstrom so ausgelegt ist, dass es die katalytische Teiloxidation mit einer Mischung aus Einspeisestrom und Rückführungsstrom ausführt, so dass Gase auf der Anodenseite des Brennstoffzellensystems sich thermodynamisch außerhalb der Verkokungsbereiche im normalen Temperaturbereich der Erwärmung, Kühlung oder des Betriebs des Brennstoffzellensystems befinden.

6. Verfahren zum Nutzen der Rückführung für ein Hochtemperatur-Brennstoffzellensystem, wobei in dem Verfahren ein anodenseitiger (100) Rückführungsstrom von Reaktanten ausgeführt wird, **dadurch gekennzeichnet, dass** in dem Verfahren ein Recyclingverhältnis von 70 % oder mehr für das Rückführungsstromvolumen erreicht wird, Einspeisung eines Einleitungsstroms in die Rückführung, der einen im Wesentlichen hohen Sauerstoffgehalt hat, und wobei der Einleitungsstrom 30 % oder weniger des gesamten Stromvolumens ausmacht, ein Wärmeaustausch ausgeführt wird, um für im Wesentlichen niedrige Temperaturbedingungen im Rückführungsstrom zu sorgen, wird eine katalytische Teiloxidation im Rückführungsstrom ausgeführt, um eine im Wesentlichen große Menge an Wasserstoff für den Rückführungsstrom in Anfahr- und Abschaltsituationen des Brennstoffzellensystems zu produzieren, und 30 % oder weniger des gesamten Stromvolumens werden aus der anodenseitigen Rückführung aufgebraucht, wobei der Wärmeaustausch für eine Einlasstemperatur von 350 °C - 500 °C für die katalytische Teil sorgt, während die Auslasstemperatur 800 °C nicht übersteigt.

7. Verfahren nach Anspruch 6, **dadurch gekennzeichnet, dass** bei dem Verfahren durch ein anodenseitiges (100) Recyclinggebläse ein Recyclingverhältnis von 80 % - 94 % für das Rückführungsstromvolumen erreicht wird, um eine Gasverbindung zu ermöglichen, die Wärme aus der katalytischen Teiloxidation enthält.

8. Verfahren nach Anspruch 6, **dadurch gekennzeichnet, dass** beim Verfahren ein Einleitungsstrom in die Rückführung eingespeist wird, der einen Lambda-Wert im Bereich von 0,55 - 0,90 umfasst, was den im Wesentlichen hohen Sauerstoffgehalt des Einleitungsstroms anzeigt.

9. Verfahren nach Anspruch 6, **dadurch gekennzeichnet, dass** bei dem Verfahren eine katalytische Teiloxidation im Rückführungsstrom ausgeführt wird, um einen prozentualen Wasserstoffgehalt von 3,5 % - 15 % für das Rückführungsstromvolumen zu erzeugen.

10. Verfahren nach Anspruch 6, **dadurch gekennzeichnet, dass** bei dem Verfahren eine katalytische Teiloxidation mit gemischtem Einleitungsstrom und Rückführungsstrom ausgeführt wird, so dass Gase auf der Anodenseite des Brennstoffzellensystems thermodynamisch außerhalb der Verkokungsbereiche im normalen Temperaturbereich des Erwärmens, Kühlens oder Betriebs des Brennstoffzellensystems sind.

## Revendications

1. Agencement utilisant une recirculation pour un système de piles à combustible à haute température, chaque pile à combustible dans le système de piles à combustible comprenant un côté anode (100), un côté cathode (102), et un électrolyte (104) entre le côté anode et le côté cathode, et le système de piles à combustible comprenant un moyen (109) pour réaliser, côté anode (100), un flux de recirculation de réactifs, **caractérisé en ce que** l'agencement comprend un moyen (120) pour accomplir un taux de recyclage de 70% ou plus pour le volume de flux de recirculation, un moyen (122) pour alimenter la recirculation avec un flux d'alimentation qui comprend une teneur en oxygène sensiblement élevée, le flux d'alimentation étant de 30% ou moins du volume total du flux, un moyen (105) pour effectuer un échange thermique afin de fournir des conditions de température sensiblement basse dans le flux de recirculation, un moyen (107) pour effectuer une oxydation catalytique partielle dans le flux de recirculation afin de produire une quantité sensiblement élevée d'hydrogène pour le flux de recirculation dans des situations de démarrage ou d'arrêt du système de piles à combustible, et un moyen (114) pour évacuer 30% ou moins du volume total du flux de la recirculation du côté anode, les moyens (105) et (120) étant étudiés pour fournir une température d'entrée de 350°C - 500°C au moyen (107) alors que la température de sortie dudit moyen (107) ne dépasse pas 800°C.

2. Agencement utilisant une recirculation selon la revendication 1, **caractérisé en ce que** l'agencement comprend une soufflante de recyclage anodique (120) en tant que moyen (120) pour accomplir un taux de recyclage de 80% - 94% pour le volume du flux de recirculation afin de permettre un composé gazeux qui contient de la chaleur provenant de l'oxydation réalisée grâce au moyen (107).

3. Agencement utilisant une recirculation selon la revendication 1, **caractérisé en ce que** les moyens (122) pour l'alimentation sont étudiés pour alimenter la recirculation avec un flux d'alimentation qui comprend une valeur lambda dans la plage allant de 0,55 - 0,90 indiquant ladite teneur en oxygène sensiblement élevée du flux d'alimentation.

4. Agencement utilisant une recirculation selon la revendication 1, **caractérisé en ce que** les moyens (107) pour effectuer l'oxydation catalytique partielle dans le flux de recirculation sont étudiés pour produire un pourcentage de la teneur d'hydrogène de 3,5% - 15% pour le volume du flux de recirculation en tant que ladite quantité d'hydrogène sensiblement élevée.

5. Agencement utilisant une recirculation selon la revendication 1, **caractérisé en ce que** des moyens (107) pour effectuer une oxydation catalytique partielle dans le flux de recirculation sont étudiés pour effectuer une oxydation catalytique partielle avec un flux d'alimentation et un flux de recirculation mélangés, de manière à ce que des gaz du côté anode du système de piles à combustible soient thermodynamiquement en-dehors de régions de cokéfaction dans une plage de températures normales de chauffage, de refroidissement ou de fonctionnement du système de piles à combustible.

6. Procédé utilisant une recirculation pour un système de piles à combustible à haute température, dans lequel procédé on réalise, du côté anode (100), un flux de recirculation de réactifs, **caractérisé en ce que**, dans le procédé, on accompli un taux de recyclage de 70% ou plus pour le volume de flux de recirculation, la recirculation étant alimentée par un flux d'alimentation qui comprend une teneur en oxygène sensiblement élevée, et le flux d'alimentation étant de 30% ou moins du volume total du flux, un échange thermique étant effectué pour fournir des conditions de température sensiblement basse dans le flux de recirculation, une oxydation catalytique partielle étant effectuée dans le flux de recirculation afin de produire une quantité sensiblement élevée d'hydrogène pour le flux de recirculation dans des situations de démarrage et d'arrêt du système de piles à combustible, et 30% ou moins du volume total du flux étant évacués de la recirculation côté anode, l'échange thermique fournissant la température d'entrée de 350°C - 500°C pour l'oxydation catalytique partielle alors que la température de sortie ne dépasse pas 800°C.

7. Procédé selon la revendication 6, **caractérisé en ce que**, dans le procédé, on accompli grâce à un soufflage de recyclage côté anode (100), un taux de recyclage de 80% - 94% pour le volume du flux de recirculation afin de permettre un composé gazeux qui contient de la chaleur provenant de l'oxydation catalytique partielle.

8. Procédé selon la revendication 6, **caractérisé en ce que**, dans le procédé, la recirculation est alimentée par un flux d'alimentation qui comprend une valeur lambda dans une plage allant de 0,55 - 0,90 indiquant ladite teneur en oxygène sensiblement élevée du flux d'alimentation.

9. Procédé selon la revendication 6, **caractérisé en ce que**, dans le procédé, on effectue une oxydation catalytique partielle dans le flux de recirculation afin de produire un pourcentage de la teneur d'hydrogène de 3,5% - 15% pour le volume du flux de recirculation en tant que ladite quantité d'hydrogène sensiblement élevée.

10. Procédé selon la revendication 6, **caractérisé en ce que**, dans le procédé, on réalise une oxydation catalytique partielle avec un flux d'alimentation et un flux de recirculation mélangés, de manière à ce que des gaz du côté anode du système de piles à combustible soient thermodynamiquement en-dehors de régions de cokéfaction dans une plage de températures normales d'un chauffage, refroidissement, ou fonctionnement de système de piles à combustible.
